(19) **Europäisches Patentamt European Patent Office Office européen des brevets**

(11) **EP 4 569 990 B1**

(12) **EUROPEAN PATENT SPECIFICATION**

(45) Date of publication and mention
of the grant of the patent:
**21.01.2026 Bulletin 2026/04**

(21) Application number: **23805215.3**

(22) Date of filing: **03.11.2023**

(51) International Patent Classification (IPC):
*H04W 72/0446* (2023.01)    *H04W 72/1263* (2023.01)
*H04W 74/0833* (2024.01)

(52) Cooperative Patent Classification (CPC):
**H04W 72/0446; H04W 72/1263; H04W 74/0833**

(86) International application number:
**PCT/SE2023/051118**

(87) International publication number:
**WO 2024/096807 (10.05.2024 Gazette 2024/19)**

(54) **PDSCH FOR REDUCED CAPABILITY USER EQUIPMENT**

PDSCH FÜR BENUTZERGERÄT MIT REDUZIERTER KAPAZITÄT

PDSCH POUR ÉQUIPEMENT UTILISATEUR À CAPACITÉ RÉDUITE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.11.2022 US 202263382380 P**

(43) Date of publication of application:
**18.06.2025 Bulletin 2025/25**

(73) Proprietor: **Telefonaktiebolaget LM Ericsson
(publ)
164 83 Stockholm (SE)**

(72) Inventors:
• **KADAN VEEDU, Sandeep Narayanan
177 45 JÄRFÄLLA (SE)**
• **MOZAFFARI, Mohammad
FREMONT, California 94555 (US)**
• **HÖGLUND, Andreas
170 62 SOLNA (SE)**
• **KITTICHOKECHAI, Kittipong
177 63 JÄRFÄLLA (SE)**
• **BERGMAN, Johan
112 27 STOCKHOLM (SE)**

(74) Representative: **Ericsson
Patent Development
Torshamnsgatan 21-23
164 80 Stockholm (SE)**

(56) References cited:
**CN-A- 115 175 143**

• **XIAOMI: "Discussion on further complexity
reduction for eRedCap UEs", vol. RAN WG1, no.
e-Meeting; 20221010 - 20221019, 30 September
2022 (2022-09-30), XP052277213, Retrieved from
the Internet <URL:https://ftp.3gpp.org/tsg_ran/
WG1_RL1/TSGR1_110b-e/Docs/R1-2209295.zip
R1-2209295_Discussion on further complexity
reduction for eRedCap UEs.doc> [retrieved on
20220930]**

**Description**

TECHNICAL FIELD

The present disclosure generally relates to communication networks, and more specifically to physical downlink shared channel (PDSCH) for reduced capability (RedCap) user equipment (UE).

BACKGROUND

The next paradigm shift in processing and manufacturing is referred to as Industry 4.0 in which factories are automated and are more flexible and dynamic with the help of wireless connectivity. This includes real-time control of robots and machines using time-critical machine-type communication (cMTC) and improved observability, control, and error detection with the help of large numbers of simple actuators and sensors (massive machine-type communication or mMTC). For cMTC support, ultra-reliable low-latency communication (URLLC) was introduced in Third Generation Partnership Project (3GPP) Release 15 for both Long Term Evolution (LTE) and New Radio (NR), and NR URLLC is further enhanced in Release 16 within the enhanced URLLC (eURLLC) and industrial Internet-of-Things (IoT) work items.

For mMTC and low power wide area (LPWA) support, 3GPP introduced both narrowband Internet-of-Things (NB-IoT) and long-term evolution for machine-type communication (LTE-MTC, or LTE-M) in Release 13. These technologies have been further enhanced through all releases up until and including the ongoing Release 17 work.

NR was introduced in 3GPP Release 15 and focused mainly on enhanced mobile broadband (eMBB) and cMTC. However, there are still several other use cases whose requirements are higher than those of LPWA networks (i.e., LTE-M/NB-IoT) but lower than those of URLLC and eMBB. To efficiently support such use cases, which are in-between eMBB, URLLC, and mMTC, 3GPP has studied reduced capability NR devices (RedCap) in Release 17..

The RedCap user equipment (UEs) are expected to be associated with lower cost, lower complexity, a longer battery life, and potentially a smaller form factor than legacy NR UEs. Therefore, several different complexity reduction features are specified for RedCap UEs in Rel-17. These complexity reduction features are listed in the Rel-17 work item description (WID) for RedCap ("Revised WID on support of reduced capability NR devices", Ericsson, 3GPP TSG RAN #95e, March 2022).

Document CN115175143A relates to a communication method for RedCap UEs.

The work item includes support for the following UE complexity reduction features. One feature is reduced maximum UE bandwidth. The maximum bandwidth of a frequency range one (FR1) RedCap UE during and after initial access is 20 MHz. The maximum bandwidth of a frequency range two (FR2) RedCap UE during and after initial access is 100 MHz.

Another feature is reduced minimum number of receive (Rx) branches. For frequency bands where a legacy NR UE is required to be equipped with a minimum of 2 Rx antenna ports, the minimum number of Rx branches supported by specification for a RedCap UE is one. The specification also supports two Rx branches for a RedCap UE in these bands.

For frequency bands where a legacy NR UE (other than 2-Rx vehicular UE) is required to be equipped with a minimum of four Rx antenna ports, the minimum number of Rx branches supported by specification for a RedCap UE is one. The specification also supports two Rx branches for a RedCap UE in these bands.

A means shall be specified by which a gNB can know the number of Rx branches of the UE.

Another feature is the maximum number of downlink multiple-input multiple-output (MIMO) layers. For a RedCap UE with one Rx branch, one downlink MIMO layer is supported. For a RedCap UE with two Rx branches, two downlink MIMO layers are supported.

Another feature is relaxed maximum modulation order. Support of 256QAM in downlink is optional (instead of mandatory) for an FR1 RedCap UE. No other relaxations of maximum modulation order are specified for a RedCap UE.

Another feature is duplex operation. Half duplex frequency division duplex (HD-FDD) type A with the minimum specification impact (note that full duplex FDD (FD-FDD) and time division duplex (TDD) are also supported).

In Rel-18, there was a study on further UE complexity reduction to further expand the market for RedCap use cases with relatively low cost, low energy consumption, and low data rate requirements, followed by a relevant work item. The potential Rel-18 improvements may be referred to as enhanced RedCap (eRedCap). The terms "Rel-18 RedCap UE" and "eRedCap UE" are used interchangeably herein.

Fifth generation (5G) networks aim to accelerate industrial transformation and digitalization, which improve flexibility, enhance productivity and efficiency, reduce maintenance, and improve operational safety. Industrial sensors play an important role for realizing such a vision. Not only widely used in industrial automation and digitalization use cases, industrial sensors are also widely used in the general environmental monitoring use cases such as monitoring of critical infrastructure (e.g., buildings, bridges, water dams, etc.) or monitoring for natural disasters (e.g., wildfire, flood, tsunami, earthquake, etc.). Another emerging new class of new 5G use cases is the smart city vertical, which covers data collection and processing to more efficiently monitor and control city resources, and to provide services to city residents. Especially, the deployment of surveillance cameras is an essential part of the smart city but also of factories and industries. Furthermore, there have been increasing interests in wearables use cases such as smart watches, eHealth related devices, and medical monitoring devices. These use cases call for different design considerations and have different requirements in terms of form factor, UE complexity and energy efficiency, compared to eMBB devices.

The support of industrial sensors, video surveillance, and wearables were the motivations behind Rel-17 RedCap. Through the Rel-17 NR RedCap work item, 3GPP has established a framework for enabling reduced capability NR devices suitable for a range of use cases, including the industrial sensors, video surveillance, and wearables use cases, with requirements on low UE complexity and sometimes also on low UE power consumption.

To further expand the market for RedCap use cases with relatively low cost, low energy consumption, and low data rate requirements, e.g., industrial wireless sensor network use cases, some further complexity reduction enhancements should be considered. Rel-18 RedCap should provide NR support for low-tier devices between existing LPWA UEs and the capabilities of Rel-17 RedCap UEs. The supported peak data rate for Rel-18 RedCap targets to 10 Mbps.

The 3GPP Rel-18 RedCap study item objectives are as follows (RP-213661, "New SID on Study on further NR RedCap UE complexity reduction", Ericsson, 3GPP TSG RAN #94e, December 2021). One objective is to further UE complexity reduction techniques based on Rel-17 evaluation methodology in TR 38.875.

One objective is to consider network impact, coexistence of Rel-17 and Rel-18 RedCap and non-RedCap UEs in a cell, UE impact, specification impact. Potential solutions, which may complement each other, for reducing device complexity are focusing on: (a) UE bandwidth reduction to 5 MHz in FR1, possibly in combination with relaxed UE processing timeline for physical downlink shared channel (PDSCH) and/or physical uplink shared channel (PUSCH) and/or channel state information (CSI); and (b) reduced UE peak data rate in FR1, possibly including restricted bandwidth for PDSCH and/or PUSCH and possibly in combination with relaxed UE processing timeline for PDSCH and/or PUSCH and/or CSI.

The outcome of the study was documented in the technical report TR 38.865, V18.0.0, "Study on further NR RedCap UE complexity reduction (Release 18)", September 2022. Following the study item, the corresponding work item was approved RP-222675, "New WID on enhanced support of reduced capability NR devices", Ericsson, 3GPP TSG RAN #97e, September 2022, with the objectives on complexity/cost reduction as outlined below.

One objective is UE baseband (BB) bandwidth reduction. 5 MHz BB bandwidth only for PDSCH (for both unicast and broadcast) and PUSCH, with 20 MHz radio frequency (RF) bandwidth for uplink and downlink. The other physical channels and signals are still allowed to use a bandwidth part (BWP) up to the 20 MHz maximum UE RF+BB bandwidth.

Another objective is UE peak data rate reduction, including relaxation of the constraint (vLayers·Qm·f $\geq$ 4) for peak data rate reduction. The relaxed constraint is, e.g., 1 (instead of 4). The parameters (vLayers, Qm, f) can be as in Rel-17 RedCap.

Both 15 kHz subcarrier spacing (SCS) and 30 kHz SCS are supported.

Another objective is to define at most one Rel-18 RedCap UE type for further UE complexity reduction.

The existing UE capability framework is used, and changes to capability signalling are specified only if necessary. By default, all UE capabilities applicable to a Rel-17 RedCap UE are applicable unless otherwise specified.

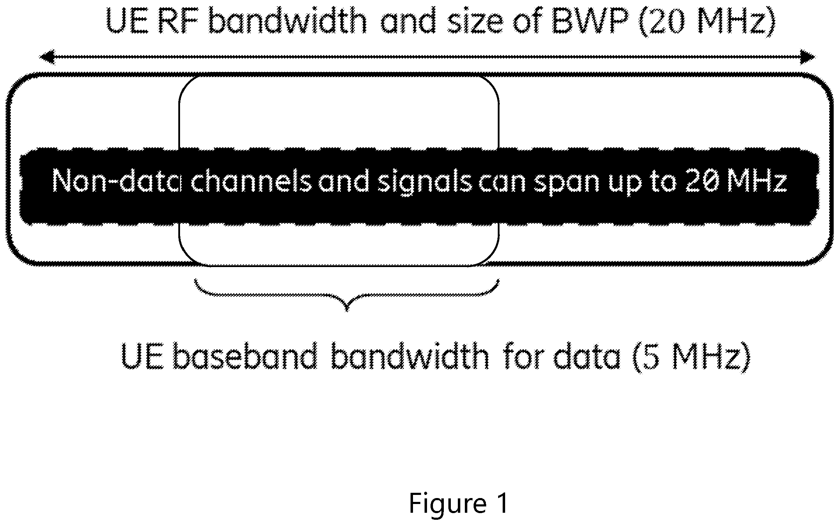

Figure 1 illustrates an example of the UE baseband bandwidth reduction for data channel (e.g., baseband bandwidth reduction for Rel-18 eRedCap). As illustrated, the size of BWPs can be up 20 MHz but data transmission/reception/processing (both uplink and downlink) is limited to a 5 MHz contiguous bandwidth. The position of the 5 MHz BB bandwidth for data can be anywhere within the 20 MHz RF bandwidth.

The following agreements can be found in R1-2210637, "RAN1 agreements for Rel-18 NR RedCap", Rapporteur (Ericsson), 3GPP TSG RAN WG1 Meeting #110bis-e, October 2022.

For UE BB bandwidth reduction, for PUSCH, down-select between the following options for the maximum number of physical resource blocks (PRBs) that the UE can transmit per slot or per hop, if applicable:

- Option 1: 28 PRBs for 15 kHz SCS and 14 PRBs for 30 kHz SCS
- Option 2: 27 PRBs for 15 kHz SCS and 13 PRBs for 30 kHz SCS
- Option 3: 25 PRBs for 15 kHz SCS and 12 PRBs for 30 kHz SCS
- Option 4: 25 PRBs for 15 kHz SCS and 11 PRBs for 30 kHz SCS

For UE BB bandwidth reduction, for PDSCH (at least for unicast), down-select between the following options for the maximum number of PRBs that the UE can process per slot:

- Option 1: 28 PRBs for 15 kHz SCS and 14 PRBs for 30 kHz SCS
- Option 2: 27 PRBs for 15 kHz SCS and 13 PRBs for 30 kHz SCS
- Option 3: 25 PRBs for 15 kHz SCS and 12 PRBs for 30 kHz SCS
- Option 4: 25 PRBs for 15 kHz SCS and 11 PRBs for 30 kHz SCS

Same option will be selected for both PDSCH (at least for unicast) and PUSCH.

For UE BB bandwidth reduction, for system information block 1 (SIB1) (PDSCH), allow the scheduling of SIB1 to be larger than 5 MHz (as in legacy operation).

For UE BB bandwidth reduction, for broadcast other system information (OSI) (PDSCH), allow the scheduling of broadcast OSI (PDSCH) to be larger than 5 MHz (as in legacy operation).

For UE BB bandwidth reduction, for paging channel (PDSCH) to Rel-18 RedCap UEs, down-select between the following options:

- Option 1: Restrict the scheduling of paging channel to be within 5 MHz.
- Option 2: Allow the scheduling of paging channel to be larger than 5 MHz (as in legacy operation).

For UE BB bandwidth reduction, for random access response (RAR) (PDSCH) to Rel-18 RedCap UEs, down-select between the following options:

- Option 1: Restrict the scheduling of RAR PDSCH to be within 5 MHz.
- Option 2: Allow the scheduling of RAR PDSCH to be larger than 5 MHz (as in legacy operation).

For UE BB bandwidth reduction, a UE is not expected to receive an uplink grant in a downlink control information (DCI) with a PUSCH resource allocation spanning a bandwidth of more than ~5 MHz per slot or per hop, if applicable.

For UE BB bandwidth reduction, a UE is not expected to be configured with a configured grant (CG) with a PUSCH resource allocation spanning a bandwidth of more than ~5 MHz per slot or per hop, if applicable.

There currently exist certain challenges. For example, the reduced capabilities associated with a Rel-18 RedCap UE may need to be accounted for by the network and/or the Rel-18 RedCap UEs, because a Rel-18 RedCap UE may not be able to match the performance that can be expected from a full capability UE. It is desirable to provide new ways of addressing this issue.

SUMMARY

As described above, certain challenges currently exist in the context of reduced capability (RedCap) user equipment (UE).

Certain aspects of the disclosure and their embodiments may provide solutions to these or other challenges. For example, particular embodiments include various procedures by which a Rel-18 RedCap UE with a 5-MHz baseband bandwidth for data channels (physical downlink shared channel (PDSCH) and physical uplink shared channel (PUSCH)) handles a broadcast PDSCH (such as, paging and random access response (RAR)) that is larger than 5 MHz.

According to some embodiments, a method is performed by a RedCap wireless device. The method comprises: receiving a PDSCH, the PDSCH including scheduling for an uplink transmission; determining whether a time duration between receiving the PDSCH and a start of the scheduled uplink transmission is greater than a threshold; and upon determining that the time duration between receiving the PDSCH and the start of the scheduled uplink transmission is greater than the threshold, transmitting the scheduled uplink transmission. The threshold depends on whether the PDSCH is received in a bandwidth that is larger than a reduced bandwidth associated with RedCap wireless devices.

In particular embodiments, the method further comprises, upon determining that the time duration between receiving the PDSCH and the start of the scheduled uplink transmission is not greater than the threshold, refraining from transmitting the scheduled uplink transmission.

In particular embodiments, the reduced bandwidth is a reduced baseband bandwidth associated with RedCap wireless devices.

In particular embodiments, a difference between a value that applies for the threshold when the PDSCH is received in a bandwidth that is larger than the reduced bandwidth and a value that applies for the threshold when the PDSCH is received in a bandwidth that is not larger than the reduced bandwidth depends on a subcarrier spacing.

In particular embodiments, the PDSCH comprises a broadcast PDSCH (e.g., RAR).

In particular embodiments, upon determining that the time duration between receiving the PDSCH and the start of the scheduled uplink transmission is not greater than the threshold, the method comprises retransmitting a physical random access channel, PRACH.

According to some embodiments, a wireless device comprises processing circuitry operable to perform any of the wireless device methods described above.

Also disclosed is a computer program product comprising a non-transitory computer readable medium storing computer readable program code, the computer readable program code operable, when executed by processing circuitry to perform any of the methods performed by the wireless device described above.

According to some embodiments, a method performed by a network node comprises transmitting a PDSCH to a RedCap wireless device. The PDSCH includes scheduling for an uplink transmission. When a time duration between the wireless device receiving the PDSCH and a start of the scheduled uplink transmission is greater than a threshold, the method further comprises receiving the scheduled uplink transmission from the wireless device. The threshold depends on whether the PDSCH is transmitted in a bandwidth that is larger than a reduced bandwidth associated with RedCap wireless devices.

In particular embodiments, when the time duration between the wireless device receiving the PDSCH and the start of the scheduled uplink transmission is not greater than the threshold, the method further comprises not receiving the scheduled uplink transmission from the wireless device.

In particular embodiments, when the time duration between the wireless device receiving the PDSCH and the start of the scheduled uplink transmission is not greater than the threshold value, the method may further comprise receiving a retransmission of a PRACH from the wireless device.

According to some embodiments, a network node comprises processing circuitry operable to perform any of the network node methods described above.

Another computer program product comprises a non-transitory computer readable medium storing computer readable program code, the computer readable program code operable, when executed by processing circuitry to perform any of the methods performed by the network node described above.

Certain embodiments may provide one or more of the following technical advantages. For example, particular embodiments facilitate scheduling of broadcast PDSCH to be larger than 5 MHz (as in legacy operation), and thus the same broadcast PDSCH may be shared between eRedCap UEs and non-eRedCap UEs. This, in turn, leads to better scheduling flexibility, lower network overhead, and lower network power consumption.

BRIEF DESCRIPTION OF THE DRAWINGS

The present disclosure may be best understood by way of example with reference to the following description and accompanying drawings that are used to illustrate embodiments of the present disclosure. In the drawings:

Figure 1 illustrates an example of the UE baseband bandwidth reduction for data channel;
Figure 2 shows an example of a communication system, according to certain embodiments;
Figure 3 shows a user equipment (UE), according to certain embodiments;
Figure 4 shows a network node, according to certain embodiments;
Figure 5 is a block diagram of a host, according to certain embodiments;
Figure 6 is a block diagram illustrating a virtualization environment in which functions implemented by some embodiments may be virtualized;
Figure 7 shows a communication diagram of a host communicating via a network node with a UE over a partially wireless connection in accordance with some embodiments;
Figure 8 is a flowchart illustrating an example method in a wireless device, according to certain embodiments; and
Figure 9 is a flowchart illustrating an example method in a network node, according to certain embodiments.

DETAILED DESCRIPTION

As described above, certain challenges currently exist in the context of reduced capability (RedCap) user equipment (UE). For example, the existing New Radio (NR) specification allows PDSCH carrying random access response (RAR) in Msg2 to be scheduled with a frequency resource allocation that is larger than 5 MHz. For Rel-18 RedCap UEs with UE baseband bandwidth reduction to 5 MHz, as described above, 3GPP is currently considering the following options for scheduling of RAR (PDSCH):

Option 1: Restrict the scheduling of RAR to be within 5 MHz.
Option 2: Allow the scheduling of RAR to be larger than 5 MHz (as in legacy operation).

For Option 1, either early indication of Rel-18 RedCap UEs in Msg1 should be configured (so that RAR can be scheduled within 5 MHz specifically for these UEs), or the network needs to schedule RAR for other types of UEs also within 5 MHz. In the latter case, although the early indication can be avoided, the capacity for multiplexing multiple RARs for different UEs in the same Msg2 may be negatively impacted.

For Option 2, the early indication of Rel-18 RedCap UEs may not be needed. Also, the network does not need to schedule RAR within 5 MHz for handling Rel-18 RedCap UEs in the cell. With Option 2, however, although the UE can receive and buffer up to 20 MHz RAR, it may only be able to process 5 MHz per slot. Therefore, PUSCH time resource allocation for Msg3 in the uplink grant in RAR should consider the minimum time between the last symbol of a RAR message with an uplink grant and the first symbol of a corresponding PUSCH transmission. In the existing specification, the minimum time is equal to $N_{T,1} + N_{T,2} + 0.5$ msec, where $N_{T,1}$ is a time duration of $N_1$ symbols corresponding to a PDSCH processing time for UE processing capability 1 when additional PDSCH demodulation reference signal (DMRS) is configured, $N_{T,2}$ is a time duration of $N_2$ symbols corresponding to a PUSCH preparation time for UE processing capability 1 (TS 38.213, 17.3.0, "NR; Physical layer procedures for control", Sept. 2022). Additionally, the PUSCH frequency resource allocation in the uplink grant in RAR is expected to not exceed 5 MHz (per hop).

For option 2, it is unclear how a Rel-18 RedCap UE should handle RAR when it receives an uplink grant in RAR that does not match the RedCap UE capability.

The existing NR specification allows PDSCH carrying paging channel to be scheduled with a frequency resource allocation that is larger than 5 MHz. For Rel-18 RedCap UEs with UE baseband bandwidth reduction to 5 MHz, as described above, 3GPP is currently considering the following options for scheduling of paging channel (PDSCH):

Option 1: Restrict the scheduling of paging channel to be within 5 MHz.
Option 2: Allow the scheduling of paging channel to be larger than 5 MHz (as in legacy operation).

For Option 1, either the paging channel needs to be transmitted specifically to Rel-18 RedCap UEs using, e.g., separate physical downlink control channel (PDCCH) search space than Type2-PDCCH common search space (CSS), using a separate paging radio network temporary identifier (P-RNTI) to scramble the DCI containing paging scheduling information, etc.), or the network needs to schedule paging channel for other types of UEs also within 5 MHz. In the latter case, the capacity for multiplexing paging records for different UEs in the same paging message may be negatively impacted.

For Option 2, the network does not need to do scheduling restrictions for paging to handle Rel-18 RedCap UEs in the cell. However, with Option 2, although the UE can receive and buffer up to 20 MHz paging, it may only be able to process 5 MHz per slot.

For option 2, it is unclear how a Rel-18 RedCap UE should handle paging channel when it receives a DL assignment in paging DCI that do not match its capability.

Certain aspects of the disclosure and their embodiments may provide solutions to these or other challenges. For example, particular embodiments include various procedures by which a Rel-18 RedCap UE with a 5-MHz baseband bandwidth for data channels (PDSCH and physical uplink shared channel (PUSCH)) handles a broadcast PDSCH (such as, paging and random access response (RAR)) that is larger than 5 MHz.

Particular embodiments are described more fully with reference to the accompanying drawings. Embodiments are provided by way of example to convey the scope of the subject matter to those skilled in the art.

Some embodiments include UE procedures for receiving RAR (PDSCH). In one embodiment, upon receiving a PDSCH conveying a RAR message with a RAR uplink grant, a Rel-18 RedCap UE may apply the following procedures. If the frequency resource allocation for the PDSCH is larger than 5 MHz, and if the time resource allocation for a corresponding PUSCH transmission scheduled by the RAR uplink grant is such that the time between the last symbol of the PDSCH and the first symbol of the corresponding PUSCH is less than $N_{T,1} + M_T + N_{T,2} + 0.5$ msec, where $N_{T,1}$ and $N_{T,1}$ are defined in TS 38.213 Clause 8.4, and $M_T$ is defined later in this section, or if the frequency resource allocation for the corresponding PUSCH transmission scheduled by the RAR uplink grant exceeds 5 MHz, then the UE shall not (or is not expected to) transmit the corresponding PUSCH, and if requested by higher layers to the physical layer, shall re-transmit a physical random access channel (PRACH). Otherwise, the UE shall apply the procedure as described in TS 38.213 Clause 8 for the corresponding PUSCH transmission.

The parameter $M_T$ is a time duration in units of symbols or slots or msec corresponding to additional PDSCH processing time that a Rel-18 RedCap UE requires to process the PDSCH if the scheduled bandwidth of the PDSCH is larger than 5 MHz. Some non-limiting examples of $M_T$ are provided below.

When the scheduled bandwidth of the PDSCH is within 5 MHz, $M_T = 0$. For this case, $M_T = s$ may also be supported if further relaxation is required, where $s > 0$ is the number of orthogonal frequency division multiplexing (OFDM) symbols (or alternatively ms or slots).

When scheduled bandwidth of the PDSCH is larger than 5 MHz, the value of $M_T$ may be either fixed (e.g., 2 slots) or can may on the bandwidth of the PDSCH, e.g., as follows:

| $M_T$ (slots) | Scheduled bandwidth of RAR PDSCH |
|---|---|
| 0 | < 5 MHz |
| 1 | 5 - 10 MHz |
| 2 | 10 - 15 MHz |
| 3 | > 15 MHz |

The value of $M_T$ may be composed of $M_{T,1}$ and $M_{T,2}$, i.e., $M_T = M_{T,1} + M_{T,2}$, where $M_{T,1}$ is a fixed value and $M_{T,2}$ varies according to the scheduled bandwidth of PDSCH carrying RAR. In an alternative embodiment, a scaling factor R is applied to adjust the time between the last symbol of the PDSCH and the first symbol of the corresponding PUSCH for Rel-18 RedCap UEs. For example, the condition may be based on $[R \times N_{T,1} + N_{T,2} + 0.5]$ msec, where R can be fixed or depend on the scheduled bandwidth of RAR PDSCH.

In another embodiment, the minimum time between the last symbol of the PDSCH and the first symbol of the corresponding uplink is extended based on the maximum scheduled bandwidth of legacy RAR PDSCH (i.e., one expansion parameter based on the worst case corresponding to max RAR PDSCH bandwidth).

The new parameters defined above ($M_T$, $M_{T,1}$, and/or $M_{T,2}$ and R) may depend on the subcarrier spacing (SCS) configuration of the PDSCH carrying RAR and/or the SCS configuration of the corresponding PUSCH transmission scheduled by the RAR uplink grant, and the carrier frequency (e.g., frequency range 1 and 2).

Based on the procedures described above, if the Rel-18 RedCap UE retransmits the PRACH, it does not apply the power ramping configurations within the information element (IE) RACH-ConfigGeneric. Alternatively, there can be an indication in system information (SI) that indicates to the Rel-18 RedCap UE whether the same power ramping configurations within the IE RACH-ConfigGeneric applies to the procedure above. The indication may be implicit or explicit. For example, the absence of the indication in SI indicates to the UE that the same power ramping configurations apply.

In another embodiment, the minimum time of $N_{T,1} + N_{T,2} + 0.5$ msec for Msg3 transmission is extended by $\left\lceil \frac{(BW_{RAR} - 5)}{5} \right\rceil$ slots whenever the cell supports Rel-18 eRedCap UEs (i.e., access barring bits for Rel-18 eRedCap is not set and Rel-18 eRedCap configuration is provided in SI). Here $BW_{RAR}$ is the transmission bandwidth of the RAR, and the rational is that an eRedCap UE in addition to the legacy time offset (including processing delay, etc.) needs one slot extra per each 5 MHz the RAR transmission bandwidth exceeds 5 MHz (because it can also process 5 MHz/slot). In this case the network needs to apply a new restriction for the uplink scheduling in time of Msg3, but the UE behavior is unaffected.

When the minimum time required by the UE between the last symbol of the PDSCH carrying RAR uplink grant and the first symbol of the corresponding PUSCH scheduled by RAR uplink grant is extended as described in the above embodiments, it might not be possible for the scheduler to rely on the existing PUSCH time domain resource allocation options.

In the current specifications, if a UE receives a PDSCH with a RAR message ending in slot *n,* the UE will be scheduled to transmit the corresponding PUSCH in slot $n+k2+\Delta$, where *k2* is the slot offset indicated by the PUSCH time domain resource allocation field in the RAR uplink grant and $\Delta$ is the additional slot offset defined per SCS configuration of the PUSCH.

In one embodiment, when a PDSCH conveying a RAR message with a RAR uplink grant is transmitted with frequency resource allocation larger than 5 MHz, a timeline for the corresponding PUSCH transmission is determined as a function of a new slot offset $\Delta M$. In one example, if a UE receives a PDSCH with a RAR message with frequency resource allocation larger than 5 MHz ending in slot *n,* the UE transmits the corresponding PUSCH in slot $n+k2+\Delta+\Delta M$, where *k2* and $\Delta$ are based on the existing definitions and $\Delta M$ is the new slot offset defined in the specification. The value of $\Delta M$ may be fixed in the specification and depend on the subcarrier spacing configuration of the PUSCH. Alternatively, the value of $\Delta M$ may depend on both the scheduled bandwidth of PDSCH carrying RAR and the subcarrier spacing configuration of the PUSCH.

Some embodiments include UE procedures for receiving paging (PDSCH). In one embodiment, up on receiving a PDCCH with a DCI scrambled with a paging radio network temporary identifier (P-RNTI) in a paging occasion, a Rel-18 RedCap UE may apply the following procedures.

If the frequency resource allocation for the PDSCH scheduled by the DCI is larger than 5 MHz, the UE shall not (or is not expected to) decode the corresponding PDSCH, and continue monitoring paging in the next paging occasion, if applicable.

Particular embodiments are applicable to both frequency range 1 (FR1) and frequency range 2 (FR2) and different UE bandwidth capabilities. In general, the UE maximum radio frequency (RF) bandwidth can be X MHz, UE baseband bandwidth Y MHz, and the legacy RAR/paging PDSCH bandwidth Z MHz. The aforementioned embodiments and new parameters may be a function of values X, Y, and Z. One example for [X,Y,Z] values in FR2 which can be considered for Rel-18 RedCap is: X= 100 MHz UE RF bandwidth, Y=20 MHz UE baseband bandwidth, and Z=69.12 MHz bandwidth for RAR/paging PDSCH.

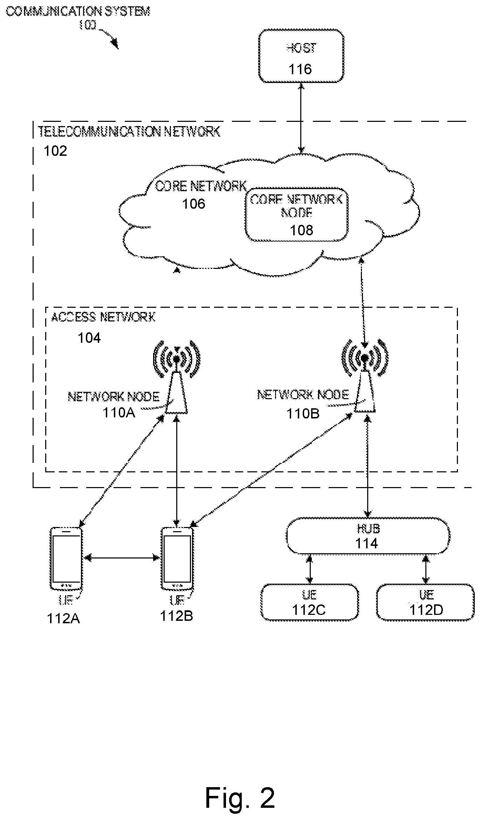

Figure 2 shows an example of a communication system 100 in accordance with some embodiments. In the example, the communication system 100 includes a telecommunication network 102 that includes an access network 104, such as a radio access network (RAN), and a core network 106, which includes one or more core network nodes 108. The access network 104 includes one or more access network nodes, such as network nodes 110a and 110b (one or more of which may be generally referred to as network nodes 110), or any other similar 3rd Generation Partnership Project (3GPP) access node or non-3GPP access point. The network nodes 110 facilitate direct or indirect connection of user equipment (UE), such as by connecting UEs 112a, 112b, 112c, and 112d (one or more of which may be generally referred to as UEs 112) to the core network 106 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 100 may include any number of wired or wireless networks, network nodes, UEs, and/or any other components or systems that may facilitate or participate in the communication of data and/or signals whether via wired or wireless connections. The communication system 100 may include and/or interface with any type of communication, telecommunication, data, cellular, radio network, and/or other similar type of system.

The UEs 112 may be any of a wide variety of communication devices, including wireless devices arranged, configured, and/or operable to communicate wirelessly with the network nodes 110 and other communication devices. Similarly, the network nodes 110 are arranged, capable, configured, and/or operable to communicate directly or indirectly with the UEs 112 and/or with other network nodes or equipment in the telecommunication network 102 to enable and/or provide network access, such as wireless network access, and/or to perform other functions, such as administration in the telecommunication network 102.

In the depicted example, the core network 106 connects the network nodes 110 to one or more hosts, such as host 116. These connections may be direct or indirect via one or more intermediary networks or devices. In other examples, network nodes may be directly coupled to hosts. The core network 106 includes one more core network nodes (e.g., core network node 108) that are structured with hardware and software components. Features of these components may be substantially similar to those described with respect to the UEs, network nodes, and/or hosts, such that the descriptions thereof are generally applicable to the corresponding components of the core network node 108. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 116 may be under the ownership or control of a service provider other than an operator or provider of the access network 104 and/or the telecommunication network 102, and may be operated by the service provider or on behalf of the service provider. The host 116 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 100 of Figure 2 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 102 is a cellular network that implements 3GPP standardized features. Accordingly, the telecommunications network 102 may support network slicing to provide different logical networks to different devices that are connected to the telecommunication network 102. For example, the telecommunications network 102 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 112 are configured to transmit and/or receive information without direct human interaction. For instance, a UE may be designed to transmit information to the access network 104 on a predetermined schedule, when triggered by an internal or external event, or in response to requests from the access network 104. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 114 communicates with the access network 104 to facilitate indirect communication between one or more UEs (e.g., UE 112c and/or 112d) and network nodes (e.g., network node 110b). In some examples, the hub 114 may be a controller, router, content source and analytics, or any of the other communication devices described herein regarding UEs. For example, the hub 114 may be a broadband router enabling access to the core network 106 for the UEs. As another example, the hub 114 may be a controller that sends commands or instructions to one or more actuators in the UEs. Commands or instructions may be received from the UEs, network nodes 110, or by executable code, script, process, or other instructions in the hub 114. As another example, the hub 114 may be a data collector that acts as temporary storage for UE data and, in some embodiments, may perform analysis or other processing of the data. As another example, the hub 114 may be a content source. For example, for a UE that is a VR headset, display, loudspeaker or other media delivery device, the hub 114 may retrieve VR assets, video, audio, or other media or data related to sensory information via a network node, which the hub 114 then provides to the UE either directly, after performing local processing, and/or after adding additional local content. In still another example, the hub 114 acts as a proxy server or orchestrator for the UEs, in particular in if one or more of the UEs are low energy IoT devices.

The hub 114 may have a constant/persistent or intermittent connection to the network node 110b. The hub 114 may also allow for a different communication scheme and/or schedule between the hub 114 and UEs (e.g., UE 112c and/or 112d), and between the hub 114 and the core network 106. In other examples, the hub 114 is connected to the core network 106 and/or one or more UEs via a wired connection. Moreover, the hub 114 may be configured to connect to an M2M service provider over the access network 104 and/or to another UE over a direct connection. In some scenarios, UEs may establish a wireless connection with the network nodes 110 while still connected via the hub 114 via a wired or wireless connection. In some embodiments, the hub 114 may be a dedicated hub - that is, a hub whose primary function is to route communications to/from the UEs from/to the network node 110b. In other embodiments, the hub 114 may be a nondedicated hub - that is, a device which is capable of operating to route communications between the UEs and network node 110b, but which is additionally capable of operating as a communication start and/or end point for certain data channels.

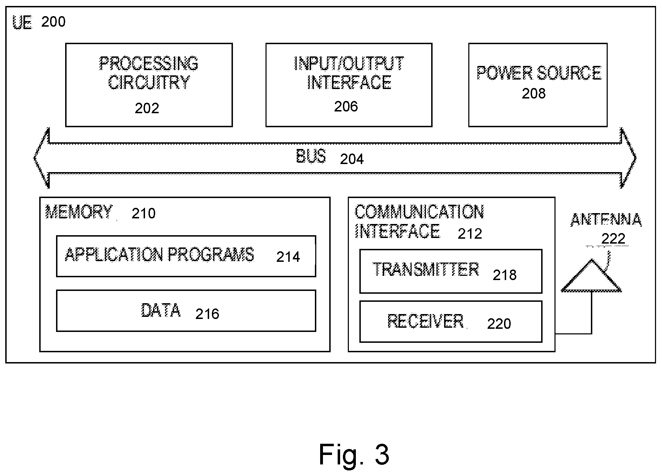

Figure 3 shows a UE 200 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 200 includes processing circuitry 202 that is operatively coupled via a bus 204 to an input/output interface 206, a power source 208, a memory 210, a communication interface 212, and/or any other component, or any combination thereof. Certain UEs may utilize all or a subset of the components shown in Figure 2. The level of integration between the components may vary from one UE to another UE. Further, certain UEs may contain multiple instances of a component, such as multiple processors, memories, transceivers, transmitters, receivers, etc.

The processing circuitry 202 is configured to process instructions and data and may be configured to implement any sequential state machine operative to execute instructions stored as machine-readable computer programs in the memory 210. The processing circuitry 202 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 202 may include multiple central processing units (CPUs).

In the example, the input/output interface 206 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 200. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 208 is structured as a battery or battery pack. Other types of power sources, such as an external power source (e.g., an electricity outlet), photovoltaic device, or power cell, may be used. The power source 208 may further include power circuitry for delivering power from the power source 208 itself, and/or an external power source, to the various parts of the UE 200 via input circuitry or an interface such as an electrical power cable. Delivering power may be, for example, for charging of the power source 208. Power circuitry may perform any formatting, converting, or other modification to the power from the power source 208 to make the power suitable for the respective components of the UE 200 to which power is supplied.

The memory 210 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 210 includes one or more application programs 214, such as an operating system, web browser application, a widget, gadget engine, or other application, and corresponding data 216. The memory 210 may store, for use by the UE 200, any of a variety of various operating systems or combinations of operating systems.

The memory 210 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 210 may allow the UE 200 to access instructions, application programs and the like, stored on transitory or non-transitory memory media, to off-load data, or to upload data. An article of manufacture, such as one utilizing a communication system may be tangibly embodied as or in the memory 210, which may be or comprise a device-readable storage medium.

The processing circuitry 202 may be configured to communicate with an access network or other network using the communication interface 212. The communication interface 212 may comprise one or more communication subsystems and may include or be communicatively coupled to an antenna 222. The communication interface 212 may include one or more transceivers used to communicate, such as by communicating with one or more remote transceivers of another device capable of wireless communication (e.g., another UE or a network node in an access network). Each transceiver may include a transmitter 218 and/or a receiver 220 appropriate to provide network communications (e.g., optical, electrical, frequency allocations, and so forth). Moreover, the transmitter 218 and receiver 220 may be coupled to one or more antennas (e.g., antenna 222) and may share circuit components, software or firmware, or alternatively be implemented separately.

In the illustrated embodiment, communication functions of the communication interface 212 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 212, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 200 shown in Figure 2.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

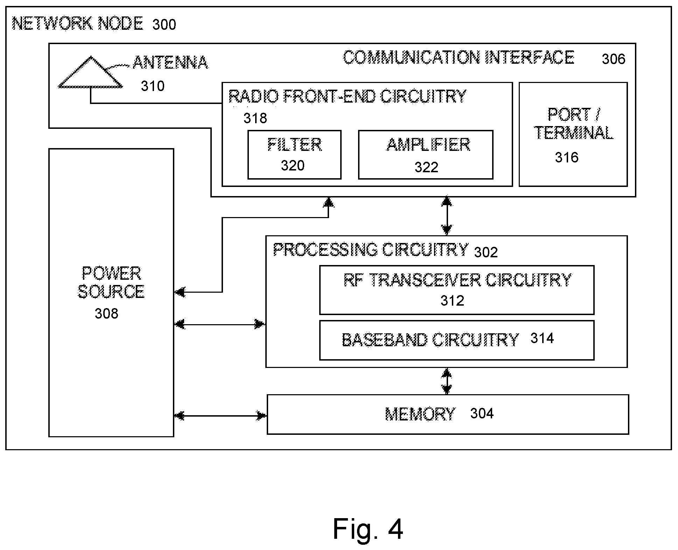

Figure 4 shows a network node 300 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 300 includes a processing circuitry 302, a memory 304, a communication interface 306, and a power source 308. The network node 300 may be composed of multiple physically separate components (e.g., a NodeB component and a RNC component, or a BTS component and a BSC component, etc.), which may each have their own respective components. In certain scenarios in which the network node 300 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 300 may be configured to support multiple radio access technologies (RATs). In such embodiments, some components may be duplicated (e.g., separate memory 304 for different RATs) and some components may be reused (e.g., a same antenna 310 may be shared by different RATs). The network node 300 may also include multiple sets of the various illustrated components for different wireless technologies integrated into network node 300, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 300.

The processing circuitry 302 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 300 components, such as the memory 304, to provide network node 300 functionality.

In some embodiments, the processing circuitry 302 includes a system on a chip (SOC). In some embodiments, the processing circuitry 302 includes one or more of radio frequency (RF) transceiver circuitry 312 and baseband processing circuitry 314. In some embodiments, the radio frequency (RF) transceiver circuitry 312 and the baseband processing circuitry 314 may be on separate chips (or sets of chips), boards, or units, such as radio units and digital units. In alternative embodiments, part or all of RF transceiver circuitry 312 and baseband processing circuitry 314 may be on the same chip or set of chips, boards, or units.

The memory 304 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 302. The memory 304 may store any suitable instructions, data, or information, including a computer program, software, an application including one or more of logic, rules, code, tables, and/or other instructions capable of being executed by the processing circuitry 302 and utilized by the network node 300. The memory 304 may be used to store any calculations made by the processing circuitry 302 and/or any data received via the communication interface 306. In some embodiments, the processing circuitry 302 and memory 304 is integrated.

The communication interface 306 is used in wired or wireless communication of signaling and/or data between a network node, access network, and/or UE. As illustrated, the communication interface 306 comprises port(s)/terminal(s) 316 to send and receive data, for example to and from a network over a wired connection. The communication interface 306 also includes radio front-end circuitry 318 that may be coupled to, or in certain embodiments a part of, the antenna 310. Radio front-end circuitry 318 comprises filters 320 and amplifiers 322. The radio front-end circuitry 318 may be connected to an antenna 310 and processing circuitry 302. The radio front-end circuitry may be configured to condition signals communicated between antenna 310 and processing circuitry 302. The radio front-end circuitry 318 may receive digital data that is to be sent out to other network nodes or UEs via a wireless connection. The radio front-end circuitry 318 may convert the digital data into a radio signal having the appropriate channel and bandwidth parameters using a combination of filters 320 and/or amplifiers 322. The radio signal may then be transmitted via the antenna 310. Similarly, when receiving data, the antenna 310 may collect radio signals which are then converted into digital data by the radio front-end circuitry 318. The digital data may be passed to the processing circuitry 302. In other embodiments, the communication interface may comprise different components and/or different combinations of components.

In certain alternative embodiments, the network node 300 does not include separate radio front-end circuitry 318, instead, the processing circuitry 302 includes radio front-end circuitry and is connected to the antenna 310. Similarly, in some embodiments, all or some of the RF transceiver circuitry 312 is part of the communication interface 306. In still other embodiments, the communication interface 306 includes one or more ports or terminals 316, the radio front-end circuitry 318, and the RF transceiver circuitry 312, as part of a radio unit (not shown), and the communication interface 306 communicates with the baseband processing circuitry 314, which is part of a digital unit (not shown).

The antenna 310 may include one or more antennas, or antenna arrays, configured to send and/or receive wireless signals. The antenna 310 may be coupled to the radio front-end circuitry 318 and may be any type of antenna capable of transmitting and receiving data and/or signals wirelessly. In certain embodiments, the antenna 310 is separate from the network node 300 and connectable to the network node 300 through an interface or port.

The antenna 310, communication interface 306, and/or the processing circuitry 302 may be configured to perform any receiving operations and/or certain obtaining operations described herein as being performed by the network node. Any information, data and/or signals may be received from a UE, another network node and/or any other network equipment. Similarly, the antenna 310, the communication interface 306, and/or the processing circuitry 302 may be configured to perform any transmitting operations described herein as being performed by the network node. Any information, data and/or signals may be transmitted to a UE, another network node and/or any other network equipment.

The power source 308 provides power to the various components of network node 300 in a form suitable for the respective components (e.g., at a voltage and current level needed for each respective component). The power source 308 may further comprise, or be coupled to, power management circuitry to supply the components of the network node 300 with power for performing the functionality described herein. For example, the network node 300 may be connectable to an external power source (e.g., the power grid, an electricity outlet) via an input circuitry or interface such as an electrical cable, whereby the external power source supplies power to power circuitry of the power source 308. As a further example, the power source 308 may comprise a source of power in the form of a battery or battery pack which is connected to, or integrated in, power circuitry. The battery may provide backup power should the external power source fail.

Embodiments of the network node 300 may include additional components beyond those shown in Figure 4 for providing certain aspects of the network node's functionality, including any of the functionality described herein and/or any functionality necessary to support the subject matter described herein. For example, the network node 300 may include user interface equipment to allow input of information into the network node 300 and to allow output of information from the network node 300. This may allow a user to perform diagnostic, maintenance, repair, and other administrative functions for the network node 300.

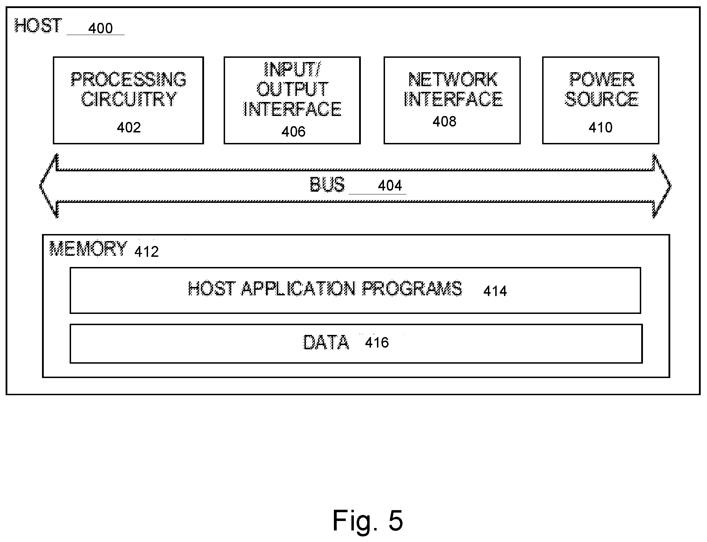

Figure 5 is a block diagram of a host 400, which may be an embodiment of the host 116 of Figure 1, in accordance with various aspects described herein. As used herein, the host 400 may be or comprise various combinations hardware and/or software, including a standalone server, a blade server, a cloud-implemented server, a distributed server, a virtual machine, container, or processing resources in a server farm. The host 400 may provide one or more services to one or more UEs.

The host 400 includes processing circuitry 402 that is operatively coupled via a bus 404 to an input/output interface 406, a network interface 408, a power source 410, and a memory 412. Other components may be included in other embodiments. Features of these components may be substantially similar to those described with respect to the devices of previous figures, such as Figures 10 and 3, such that the descriptions thereof are generally applicable to the corresponding components of host 400.

The memory 412 may include one or more computer programs including one or more host application programs 414 and data 416, which may include user data, e.g., data generated by a UE for the host 400 or data generated by the host 400 for a UE. Embodiments of the host 400 may utilize only a subset or all of the components shown. The host application programs 414 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 414 may also provide for user authentication and licensing checks and may periodically report health, routes, and content availability to a central node, such as a device in or on the edge of a core network. Accordingly, the host 400 may select and/or indicate a different host for over-the-top services for a UE. The host application programs 414 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

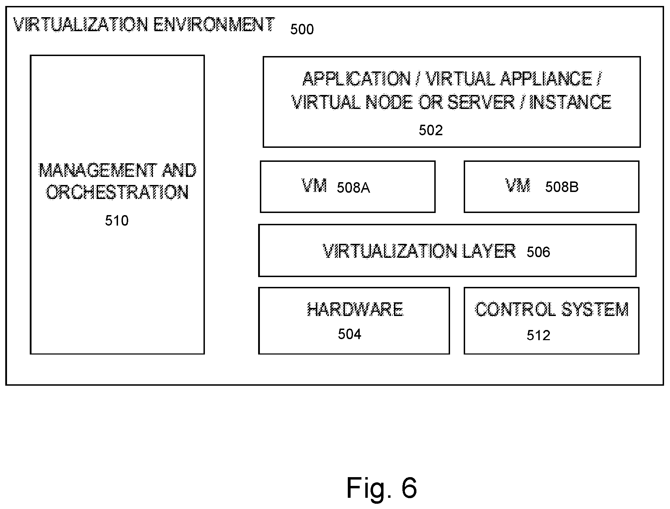

Figure 6 is a block diagram illustrating a virtualization environment 500 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 500 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 502 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 504 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 506 (also referred to as hypervisors or virtual machine monitors (VMMs)), provide VMs 508a and 508b (one or more of which may be generally referred to as VMs 508), and/or perform any of the functions, features and/or benefits described in relation with some embodiments described herein. The virtualization layer 506 may present a virtual operating platform that appears like networking hardware to the VMs 508.

The VMs 508 comprise virtual processing, virtual memory, virtual networking or interface and virtual storage, and may be run by a corresponding virtualization layer 506. Different embodiments of the instance of a virtual appliance 502 may be implemented on one or more of VMs 508, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 508 may be a software implementation of a physical machine that runs programs as if they were executing on a physical, non-virtualized machine. Each of the VMs 508, and that part of hardware 504 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 508 on top of the hardware 504 and corresponds to the application 502.

Hardware 504 may be implemented in a standalone network node with generic or specific components.

Hardware 504 may implement some functions via virtualization. Alternatively, hardware 504 may be part of a larger cluster of hardware (e.g. such as in a data center or CPE) where many hardware nodes work together and are managed via management and orchestration 510, which, among others, oversees lifecycle management of applications 502. In some embodiments, hardware 504 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 512 which may alternatively be used for communication between hardware nodes and radio units.

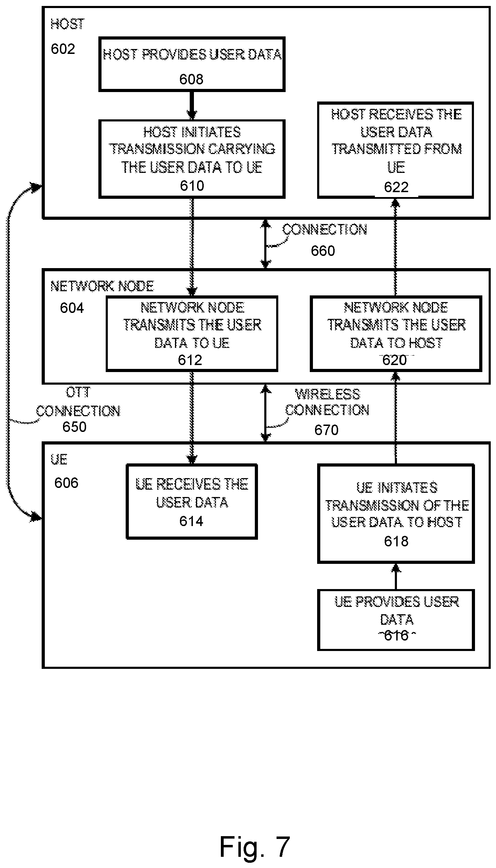

Figure 7 shows a communication diagram of a host 602 communicating via a network node 604 with a UE 606 over a partially wireless connection in accordance with some embodiments. Example implementations, in accordance with various embodiments, of the UE (such as a UE 112a of Figure 2 and/or UE 200 of Figure 2), network node (such as network node 110a of Figure 2 and/or network node 300 of Figure 3), and host (such as host 116 of Figure 2 and/or host 400 of Figure 4) discussed in the preceding paragraphs will now be described with reference to Figure 6.

Like host 400, embodiments of host 602 include hardware, such as a communication interface, processing circuitry, and memory. The host 602 also includes software, which is stored in or accessible by the host 602 and executable by the processing circuitry. The software includes a host application that may be operable to provide a service to a remote user, such as the UE 606 connecting via an over-the-top (OTT) connection 650 extending between the UE 606 and host 602. In providing the service to the remote user, a host application may provide user data which is transmitted using the OTT connection 650.

The network node 604 includes hardware enabling it to communicate with the host 602 and UE 606. The connection 660 may be direct or pass through a core network (like core network 106 of Figure 1) and/or one or more other intermediate networks, such as one or more public, private, or hosted networks. For example, an intermediate network may be a backbone network or the Internet.

The UE 606 includes hardware and software, which is stored in or accessible by UE 606 and executable by the UE's processing circuitry. The software includes a client application, such as a web browser or operator-specific "app" that may be operable to provide a service to a human or non-human user via UE 606 with the support of the host 602. In the host 602, an executing host application may communicate with the executing client application via the OTT connection 650 terminating at the UE 606 and host 602. In providing the service to the user, the UE's client application may receive request data from the host's host application and provide user data in response to the request data. The OTT connection 650 may transfer both the request data and the user data. The UE's client application may interact with the user to generate the user data that it provides to the host application through the OTT connection 650.

The OTT connection 650 may extend via a connection 660 between the host 602 and the network node 604 and via a wireless connection 670 between the network node 604 and the UE 606 to provide the connection between the host 602 and the UE 606. The connection 660 and wireless connection 670, over which the OTT connection 650 may be provided, have been drawn abstractly to illustrate the communication between the host 602 and the UE 606 via the network node 604, without explicit reference to any intermediary devices and the precise routing of messages via these devices.

As an example of transmitting data via the OTT connection 650, in step 608, the host 602 provides user data, which may be performed by executing a host application. In some embodiments, the user data is associated with a particular human user interacting with the UE 606. In other embodiments, the user data is associated with a UE 606 that shares data with the host 602 without explicit human interaction. In step 610, the host 602 initiates a transmission carrying the user data towards the UE 606. The host 602 may initiate the transmission responsive to a request transmitted by the UE 606. The request may be caused by human interaction with the UE 606 or by operation of the client application executing on the UE 606. The transmission may pass via the network node 604, in accordance with the teachings of the embodiments described throughout this disclosure. Accordingly, in step 612, the network node 604 transmits to the UE 606 the user data that was carried in the transmission that the host 602 initiated, in accordance with the teachings of the embodiments described throughout this disclosure. In step 614, the UE 606 receives the user data carried in the transmission, which may be performed by a client application executed on the UE 606 associated with the host application executed by the host 602.

In some examples, the UE 606 executes a client application which provides user data to the host 602. The user data may be provided in reaction or response to the data received from the host 602. Accordingly, in step 616, the UE 606 may provide user data, which may be performed by executing the client application. In providing the user data, the client application may further consider user input received from the user via an input/output interface of the UE 606. Regardless of the specific manner in which the user data was provided, the UE 606 initiates, in step 618, transmission of the user data towards the host 602 via the network node 604. In step 620, in accordance with the teachings of the embodiments described throughout this disclosure, the network node 604 receives user data from the UE 606 and initiates transmission of the received user data towards the host 602. In step 622, the host 602 receives the user data carried in the transmission initiated by the UE 606.

One or more of the various embodiments improve the performance of OTT services provided to the UE 606 using the OTT connection 650, in which the wireless connection 670 forms the last segment. More precisely, the teachings of these embodiments may improve the data rate and latency and thereby provide benefits such as reduced user waiting time, better responsiveness, and better QoE.

In an example scenario, factory status information may be collected and analyzed by the host 602. As another example, the host 602 may process audio and video data which may have been retrieved from a UE for use in creating maps. As another example, the host 602 may collect and analyze real-time data to assist in controlling vehicle congestion (e.g., controlling traffic lights). As another example, the host 602 may store surveillance video uploaded by a UE. As another example, the host 602 may store or control access to media content such as video, audio, VR or AR which it can broadcast, multicast or unicast to UEs. As other examples, the host 602 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 650 between the host 602 and UE 606, in response to variations in the measurement results. The measurement procedure and/or the network functionality for reconfiguring the OTT connection may be implemented in software and hardware of the host 602 and/or UE 606. In some embodiments, sensors (not shown) may be deployed in or in association with other devices through which the OTT connection 650 passes; the sensors may participate in the measurement procedure by supplying values of the monitored quantities exemplified above, or supplying values of other physical quantities from which software may compute or estimate the monitored quantities. The reconfiguring of the OTT connection 650 may include message format, retransmission settings, preferred routing etc.; the reconfiguring need not directly alter the operation of the network node 604. Such procedures and functionalities may be known and practiced in the art. In certain embodiments, measurements may involve proprietary UE signaling that facilitates measurements of throughput, propagation times, latency and the like, by the host 602. The measurements may be implemented in that software causes messages to be transmitted, in particular empty or 'dummy' messages, using the OTT connection 650 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

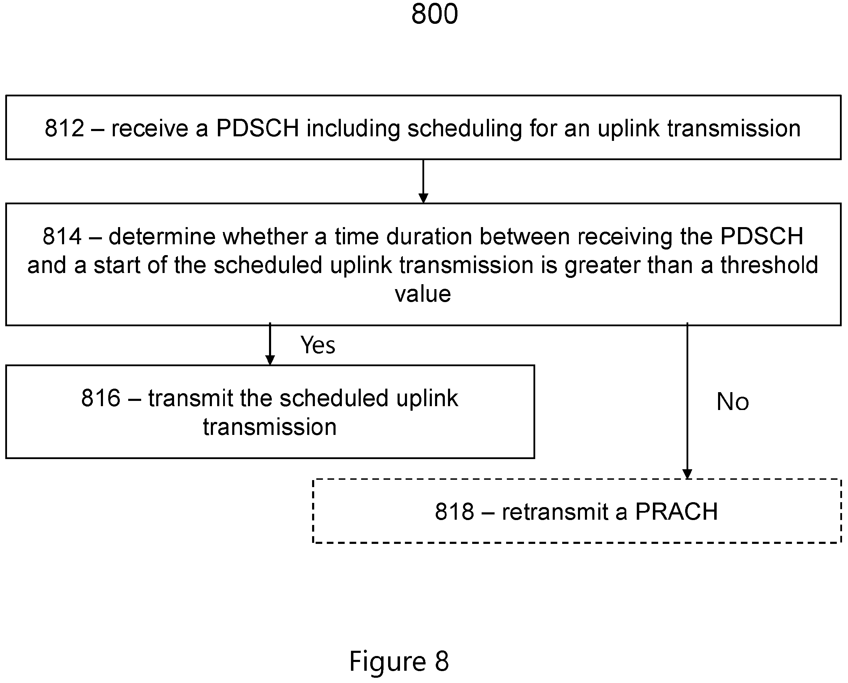

FIGURE 8 is a flowchart illustrating an example method 800 in a wireless device, according to certain embodiments. In particular embodiments, one or more steps of FIGURE 8 may be performed by UE 200 described with respect to FIGURE 3.

The method 800 begins at step 812, where the RedCap wireless device (e.g., UE 200) receives , as claimed, a PDSCH. The PDSCH includes , as claimed, scheduling for an uplink transmission. The PDSCH may comprise a broadcast PDSCH, such as a RAR. The PDSCH may be received in a bandwidth that is larger than a reduced bandwidth associated with RedCap wireless devices (such as the RedCap wireless device performing the method 800).

In particular embodiments, the reduced bandwidth is a reduced baseband bandwidth associated with the RedCap wireless device. In particular embodiments, the reduced bandwidth is based on a number of physical resource blocks and a subcarrier spacing. The reduced bandwidth may be 5 MHz.

At step 814, the RedCap wireless device determines whether a time duration between receiving the PDSCH and a start of the scheduled uplink transmission is greater than a threshold. The threshold depends , as claimed, on whether the PDSCH is received in a bandwidth that is larger than a reduced bandwidth associated with RedCap wireless devices (such as the RedCap wireless device performing the method 800).

In particular embodiments, a difference between a value that applies for the threshold when the PDSCH is received in a bandwidth that is larger than the reduced bandwidth and a value that applies for the threshold when the PDSCH is received in a bandwidth that is not larger than the reduced bandwidth depends on a subcarrier spacing. In particular embodiments, the threshold may be determined according to any of the embodiments and examples described herein.

Upon determining that the time duration between receiving the PDSCH and the start of the scheduled uplink transmission is greater than the threshold, the method continues to step 816, where the RedCap wireless device transmits the scheduled uplink transmission.

Upon determining that the time duration between receiving the PDSCH and the start of the scheduled uplink transmission is not greater than the threshold, the RedCap wireless device may for example refrain from transmitting the scheduled uplink transmission and may for example continue to step 818, where the RedCap wireless device retransmits a PRACH.

Modifications, additions, or omissions may be made to method 800 of FIGURE 8. Additionally, one or more steps in the method of FIGURE 8 may be performed in parallel or in any suitable order.

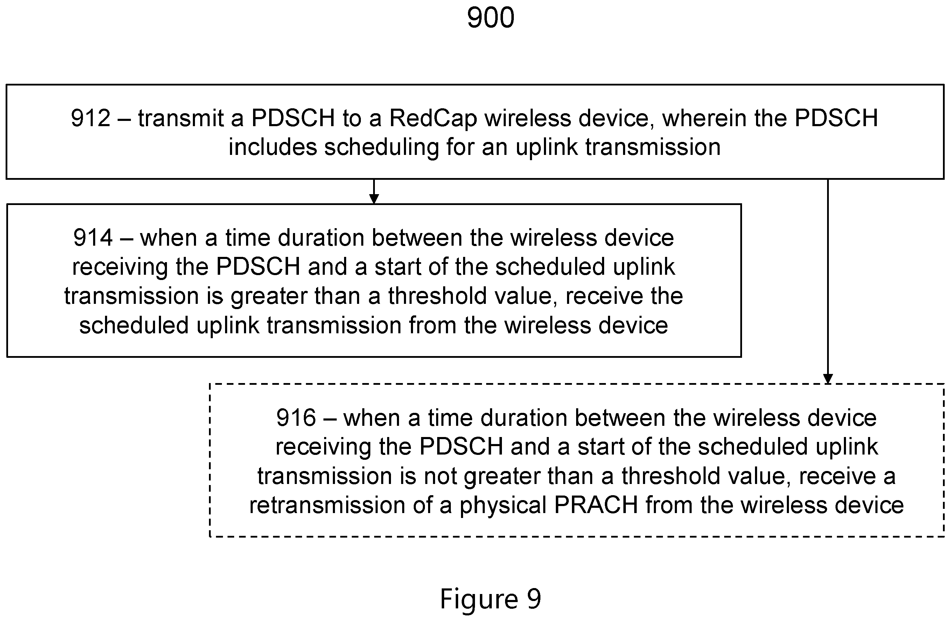

FIGURE 9 is a flowchart illustrating an example method 900 in a network node, according to certain embodiments. In particular embodiments, one or more steps of FIGURE 9 may be performed by network node 300 described with respect to FIGURE 4.

The method 900 begins at step 912, where the network node (e.g., network node 300) transmits , as claimed, a PDSCH to a RedCap wireless device. The PDSCH includes scheduling for an uplink transmission. The network node may or may not be aware that the wireless device is a RedCap wireless device.

The PDSCH may comprise a broadcast PDSCH, such as a RAR. The PDSCH may be transmitted in a bandwidth that is larger than a reduced bandwidth associated with RedCap wireless devices (such as the RedCap wireless device receiving the PDSCH).

In particular embodiments, the reduced bandwidth is a reduced baseband bandwidth associated with the RedCap wireless device. In particular embodiments, the reduced bandwidth is based on a number of physical resource blocks and a subcarrier spacing. The reduced bandwidth may be 5 MHz.

When a time duration between the wireless device receiving the PDSCH and a start of the scheduled uplink transmission is greater than a threshold, the method continues to step 914, where the network node receives the scheduled uplink transmission from the wireless device. The threshold depends, as claimed, on whether the PDSCH is transmitted in a bandwidth that is larger than a reduced bandwidth associated with RedCap wireless devices (such as the RedCap wireless device receiving the PDSCH).

In particular embodiments, a difference between a value that applies for the threshold when the PDSCH is transmitted in a bandwidth that is larger than the reduced bandwidth and a value that applies for the threshold when the PDSCH is transmitted in a bandwidth that is not larger than the reduced bandwidth depends on a subcarrier spacing.. In particular embodiments, the threshold value may be determined according to any of the embodiments and examples described herein.

When the time duration between the wireless device receiving the PDSCH and the start of the scheduled uplink transmission is not greater than the threshold, the method may for example continue to step 916, where the network node does not receive the scheduled uplink transmission from the wireless device and may instead receive a retransmission of a PRACH from the wireless device.

Modifications, additions, or omissions may be made to method 900 of FIGURE 9. Additionally, one or more steps in the method of FIGURE 9 may be performed in parallel or in any suitable order.

The foregoing description sets forth numerous specific details. It is understood, however, that embodiments may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments, whether or not explicitly described.

Although this disclosure has been described in terms of certain embodiments, alterations and permutations of the embodiments will be apparent to those skilled in the art.

**Claims**

1. A method (800) performed by a reduced capability, RedCap, wireless device, the method comprising:

   receiving (812) a physical downlink shared channel, PDSCH, the PDSCH including scheduling for an uplink transmission; wherein the scheduled uplink transmission is to be transmitted by the RedCap wireless device based on determining that a time duration between receiving the PDSCH and the start of the scheduled uplink transmission is greater than a threshold,
   wherein the threshold depends on whether the PDSCH is received in a bandwidth that is larger than a reduced bandwidth associated with RedCap wireless devices.

2. The method of claim 1, wherein the scheduled uplink transmission is transmitted by the RedCap wireless device if the time duration between receiving the PDSCH and the start of the scheduled uplink transmission is greater than the threshold.

3. The method of any one of claims 1-2, wherein the RedCap wireless device refrains from transmitting (816) the scheduled uplink transmission if the time duration between receiving the PDSCH and the start of the scheduled uplink transmission is not greater than the threshold.

4. The method of any one of claims 1-3, wherein the reduced bandwidth is a reduced baseband bandwidth associated with RedCap wireless devices.

5. The method of any one of claims 1-4, wherein a difference between a value that applies for the threshold when the PDSCH is received in a bandwidth that is larger than the reduced bandwidth and a value that applies for the threshold when the PDSCH is received in a bandwidth that is not larger than the reduced bandwidth depends on a subcarrier spacing.

6. The method of claim 5, wherein the PDSCH carries a random access response, RAR, and the scheduled uplink transmission is a physical uplink shared channel, PUSCH, transmission scheduled by an uplink grant of the RAR, wherein the subcarrier spacing is a subcarrier spacing configured for the PDSCH and/or a subcarrier spacing configured for the PUSCH transmission.

7. The method of any one of claims 1-6, wherein the reduced bandwidth is based on a number of physical resource blocks and a subcarrier spacing.

8. The method of any one of claims 1-7, wherein the PDSCH comprises a random access response, RAR, wherein the RedCap wireless device retransmits (818) a physical random access channel, PRACH, if the time duration between receiving the PDSCH and the start of the scheduled uplink transmission is not greater than the threshold.

9. A reduced capability, RedCap, wireless device (200) comprising processing circuitry (202) operable to:

   receive a physical downlink shared channel, PDSCH, the PDSCH including scheduling for an uplink transmission; wherein the scheduled uplink transmission is to be transmitted by the RedCap wireless device based on determining that a time duration between receiving the PDSCH and the start of the scheduled uplink transmission is greater than a threshold,
   wherein the threshold depends on whether the PDSCH is received in a bandwidth that is larger than a reduced bandwidth associated with RedCap wireless devices.

10. The RedCap wireless device of claim 9, wherein the scheduled uplink transmission is transmitted by the RedCap wireless device if the time duration between receiving the PDSCH and the start of the scheduled uplink transmission is greater than the threshold.

11. The RedCap wireless device of any one of claims 9-10, wherein the RedCap wireless device refrains from transmitting the scheduled uplink transmission if the time duration between receiving the PDSCH and the start of the scheduled uplink transmission is not greater than the threshold.

12. The RedCap wireless device of any one of claims 9-11, wherein a difference between a value that applies for the threshold when the PDSCH is received in a bandwidth that is larger than the reduced bandwidth and a value that applies for the threshold when the PDSCH is received in a bandwidth that is not larger than the reduced bandwidth depends on a subcarrier spacing.

13. The RedCap wireless device of claim 12, wherein the PDSCH carries a random access response, RAR, and the scheduled uplink transmission is a physical uplink shared channel, PUSCH, transmission scheduled by an uplink grant of the RAR, wherein the subcarrier spacing is a subcarrier spacing configured for the PDSCH and/or a subcarrier spacing configured for the PUSCH transmission

14. A method (900) performed by a network node, the method comprising:

transmitting (912) a physical downlink shared channel, PDSCH, to a reduced capability, RedCap, wireless device, wherein the PDSCH includes scheduling for an uplink transmission;
wherein the scheduled uplink transmission from the RedCap wireless device is to be received by the network node based on a time duration between the RedCap wireless device receiving the PDSCH and a start of the scheduled uplink transmission being greater than a threshold,
wherein the threshold depends on whether the PDSCH is transmitted in a bandwidth that is larger than a reduced bandwidth associated with RedCap wireless devices.

15. A network node (300) comprising processing circuitry (302), the processing circuitry operable to:

transmit a physical downlink shared channel, PDSCH, to a reduced capability, RedCap, wireless device, wherein the PDSCH includes scheduling for an uplink transmission; wherein the scheduled uplink transmission from the RedCap wireless device is to be received by the network node based on a time duration between the RedCap wireless device receiving the PDSCH and a start of the scheduled uplink transmission being greater than a threshold,
wherein the threshold depends on whether the PDSCH is transmitted in a bandwidth that is larger than a reduced bandwidth associated with RedCap wireless devices.

**Patentansprüche**

1. Verfahren (800), das von einer drahtlosen Vorrichtung mit reduzierten Fähigkeiten, RedCap, durchgeführt wird, wobei das Verfahren Folgendes umfasst:

Empfangen (812) eines gemeinsamen physikalischen Downlink-Kanals, PDSCH, wobei der PDSCH die Disposition einer Uplink-Übertragung umfasst; wobei
die disponierte Uplink-Übertragung von der drahtlosen RedCap-Vorrichtung basierend auf einem Bestimmen gesendet werden soll, dass eine Zeitdauer zwischen dem Empfang des PDSCH und dem Start der disponierten Uplink-Übertragung größer als ein Schwellenwert ist,
wobei der Schwellenwert davon abhängt, ob der PDSCH in einer Bandbreite empfangen wird, die größer als eine reduzierte Bandbreite ist, die mit drahtlosen RedCap-Vorrichtungen assoziiert ist.

2. Verfahren nach Anspruch 1, wobei die disponierte Uplink-Übertragung von der drahtlosen RedCap-Vorrichtung gesendet wird, falls die Zeitdauer zwischen dem Empfang des PDSCH und dem Start der disponierten Uplink-Übertragung größer als der Schwellenwert ist.

3. Verfahren nach einem der Ansprüche 1-2, wobei die drahtlose RedCap-Vorrichtung Senden (816) der disponierten Uplink-Übertragung unterlässt, falls die Zeitdauer zwischen dem Empfang des PDSCH und dem Start der disponierten Uplink-Übertragung nicht größer als der Schwellenwert ist.

4. Verfahren nach einem der Ansprüche 1-3, wobei die reduzierte Bandbreite eine reduzierte Basisband-Bandbreite ist, die mit drahtlosen RedCap-Vorrichtungen assoziiert ist.

5. Verfahren nach einem der Ansprüche 1-4, wobei eine Differenz zwischen einem Wert, der für den Schwellenwert gilt, wenn der PDSCH in einer Bandbreite empfangen wird, die größer als die reduzierte Bandbreite ist, und einem Wert, der für den Schwellenwert gilt, wenn der PDSCH in einer Bandbreite empfangen wird, die nicht größer als die reduzierte Bandbreite ist, von einem Unterträgerabstand abhängt.

6. Verfahren nach Anspruch 5, wobei der PDSCH eine Direktzugriffsantwort, RAR, transportiert und die disponierte Uplink-Übertragung eine Übertragung eines gemeinsamen physikalischen Uplink-Kanals, PUSCH, ist, die durch eine Uplink-Freigabe der RAR disponiert wird, wobei der Unterträgerabstand ein Unterträgerabstand, der für den PDSCH konfiguriert ist, und/oder ein Unterträgerabstand ist, der für die PUSCH-Übertragung konfiguriert ist.

7. Verfahren nach einem der Ansprüche 1-6, wobei die reduzierte Bandbreite auf einer Anzahl von physikalischen Ressourcenblöcken und einem Unterträgerabstand basiert.

8. Verfahren nach einem der Ansprüche 1-7, wobei der PDSCH eine Direktzugriffsantwort, RAR, umfasst, wobei die drahtlose RedCap-Vorrichtung einen physikalischen Direktzugriffskanal, PRACH, erneut sendet (818), falls die Zeitdauer zwischen dem Empfang des PDSCH und dem Start der disponierten Uplink-Übertragung nicht größer als der Schwellenwert ist.

9. Drahtlose Vorrichtung (200) mit reduzierten Fähigkeiten, RedCap, umfassend Verarbeitungsschaltungsanordnung (202), die zu Folgendem ausgelegt ist:

Empfangen eines gemeinsamen physikalischen Downlink-Kanals, PDSCH, wobei der PDSCH die Disposition einer Uplink-Übertragung umfasst; wobei die disponierte Uplink-Übertragung von der drahtlosen RedCap-Vorrichtung basierend auf einem Bestimmen gesendet werden soll, dass eine Zeitdauer zwischen dem Empfang des PDSCH und dem Start der disponierten Uplink-Übertragung größer als ein Schwellenwert ist, wobei der Schwellenwert davon abhängt, ob der PDSCH in einer Bandbreite empfangen wird, die größer als eine reduzierte Bandbreite ist, die mit drahtlosen RedCap-Vorrichtungen assoziiert ist.

10. Drahtlose RedCap-Vorrichtung nach Anspruch 9, wobei die disponierte Uplink-Übertragung von der drahtlosen RedCap-Vorrichtung gesendet wird, falls die Zeitdauer zwischen dem Empfang des PDSCH und dem Start der disponierten Uplink-Übertragung größer als der Schwellenwert ist.

11. Drahtlose RedCap-Vorrichtung nach einem der Ansprüche 9-10, wobei die drahtlose RedCap-Vorrichtung Senden der disponierten Uplink-Übertragung unterlässt, falls die Zeitdauer zwischen dem Empfang des PDSCH und dem Start der disponierten Uplink-Übertragung nicht größer als der Schwellenwert ist.

12. Drahtlose RedCap-Vorrichtung nach einem der Ansprüche 9-11, wobei eine Differenz zwischen einem Wert, der für den Schwellenwert gilt, wenn der PDSCH in einer Bandbreite empfangen wird, die größer als die reduzierte Bandbreite ist, und einem Wert, der für den Schwellenwert gilt, wenn der PDSCH in einer Bandbreite empfangen wird, die nicht größer als die reduzierte Bandbreite ist, von einem Unterträgerabstand abhängt.

13. Drahtlose RedCap-Vorrichtung nach Anspruch 12, wobei der PDSCH eine Direktzugriffsantwort, RAR, transportiert und die disponierte Uplink-Übertragung eine Übertragung eines gemeinsamen physikalischen Uplink-Kanals, PUSCH, ist, die durch eine Uplink-Freigabe der RAR disponiert wird, wobei der Unterträgerabstand ein Unterträgerabstand, der für den PDSCH konfiguriert ist, und/oder ein Unterträgerabstand ist, der für die PUSCH-Übertragung konfiguriert ist.

14. Verfahren (900), das von einem Netzwerkknoten durchgeführt wird, wobei das Verfahren Folgendes umfasst:

Senden (912) eines gemeinsamen physikalischen Downlink-Kanals, PDSCH, an eine drahtlose Vorrichtung mit reduzierten Fähigkeiten, RedCap, wobei der PDSCH die Disposition einer Uplink-Übertragung umfasst; wobei die disponierte Uplink-Übertragung von der drahtlosen RedCap-Vorrichtung durch den Netzwerkknoten basierend darauf empfangen werden soll, dass eine Zeitdauer zwischen dem Empfang des PDSCH durch die drahtlose RedCap-Vorrichtung und einem Start der disponierten Uplink-Übertragung größer als ein Schwellenwert ist, wobei der Schwellenwert davon abhängt, ob der PDSCH in einer Bandbreite gesendet wird, die größer als eine reduzierte Bandbreite ist, die mit drahtlosen RedCap-Vorrichtungen assoziiert ist.

15. Netzwerkknoten (300), umfassend Verarbeitungsschaltungsanordnung (302), die zu Folgendem ausgelegt ist:

**EP 4 569 990 B1**

Senden eines gemeinsamen physikalischen Downlink-Kanals, PDSCH, an eine drahtlose Vorrichtung mit reduzierten Fähigkeiten, RedCap, wobei der PDSCH die Disposition einer Uplink-Übertragung umfasst; wobei die disponierte Uplink-Übertragung von der drahtlosen RedCap-Vorrichtung durch den Netzwerkknoten basierend darauf empfangen werden soll, dass eine Zeitdauer zwischen dem Empfang des PDSCH durch die drahtlose RedCap-Vorrichtung und einem Start der disponierten Uplink-Übertragung größer als ein Schwellenwert ist,

wobei der Schwellenwert davon abhängt, ob der PDSCH in einer Bandbreite gesendet wird, die größer als eine reduzierte Bandbreite ist, die mit drahtlosen RedCap-Vorrichtungen assoziiert ist.

## Revendications

1. Procédé (800) réalisé par un dispositif sans fil à capacité réduite, RedCap, le procédé comprenant :

    la réception (812) d'un canal partagé de liaison descendante physique, PDSCH, le PDSCH incluant la planification d'une transmission de liaison montante ; dans lequel
    la transmission de liaison montante planifiée doit être transmise par le dispositif sans fil RedCap sur la base de la détermination qu'une durée entre la réception du PDSCH et le début de la transmission de liaison montante planifiée est supérieure à un seuil,
    dans lequel le seuil dépend de si le PDSCH est reçu dans une bande passante qui est supérieure à une bande passante réduite associée à des dispositifs sans fil RedCap.

2. Procédé selon la revendication 1, dans lequel la transmission de liaison montante planifiée est transmise par le dispositif sans fil RedCap si la durée entre la réception du PDSCH et le début de la transmission de liaison montante planifiée est supérieure au seuil.

3. Procédé selon l'une quelconque des revendications 1 et 2, dans lequel le dispositif sans fil RedCap s'abstient de transmettre (816) la transmission de liaison montante planifiée si la durée entre la réception du PDSCH et le début de la transmission de liaison montante planifiée n'est pas supérieure au seuil.

4. Procédé selon l'une quelconque des revendications 1 à 3, dans lequel la bande passante réduite est une bande passante de bande de base réduite associée à des dispositifs sans fil RedCap.

5. Procédé selon l'une quelconque des revendications 1 à 4, dans lequel une différence entre une valeur qui s'applique pour le seuil lorsque le PDSCH est reçu dans une bande passante qui est supérieure à la bande passante réduite et une valeur qui s'applique pour le seuil lorsque le PDSCH est reçu dans une bande passante qui n'est pas supérieure à la bande passante réduite dépend d'un espacement de sous-porteuses.

6. Procédé selon la revendication 5, dans lequel le PDSCH porte une réponse d'accès aléatoire, RAR, et la transmission de liaison montante planifiée est une transmission de canal partagé de liaison montante physique, PUSCH, planifiée par un octroi de liaison montante de la RAR, dans lequel l'espacement de sous-porteuses est un espacement de sous-porteuses configuré pour le PDSCH et/ou un espacement de sous-porteuses configuré pour la transmission de PUSCH.

7. Procédé selon l'une quelconque des revendications 1 à 6, dans lequel la bande passante réduite est basée sur un nombre de blocs de ressources physiques et un espacement de sous-porteuses.

8. Procédé selon l'une quelconque des revendications 1 à 7, dans lequel le PDSCH comprend une réponse d'accès aléatoire, RAR, dans lequel le dispositif sans fil RedCap retransmet (818) un canal d'accès aléatoire physique, PRACH, si la durée entre la réception du PDSCH et le début de la transmission de liaison montante planifiée n'est pas supérieure au seuil.

9. Dispositif sans fil à capacité réduite, RedCap, (200) comprenant une circuiterie de traitement (202) exploitable pour :

    recevoir un canal partagé de liaison descendante physique, PDSCH, le PDSCH incluant la planification d'une transmission de liaison montante ; dans lequel la transmission de liaison montante planifiée doit être transmise par le dispositif sans fil RedCap sur la base de la détermination qu'une durée entre la réception du PDSCH et le début de la transmission de liaison montante planifiée est supérieure à un seuil,

dans lequel le seuil dépend de si le PDSCH est reçu dans une bande passante qui est supérieure à une bande passante réduite associée à des dispositifs sans fil RedCap.

10. Dispositif sans fil RedCap selon la revendication 9, dans lequel la transmission de liaison montante planifiée est transmise par le dispositif sans fil RedCap si la durée entre la réception du PDSCH et le début de la transmission de liaison montante planifiée est supérieure au seuil.

11. Dispositif sans fil RedCap selon l'une quelconque des revendications 9 et 10, dans lequel le dispositif sans fil RedCap s'abstient de transmettre la transmission de liaison montante planifiée si la durée entre la réception du PDSCH et le début de la transmission de liaison montante planifiée n'est pas supérieure au seuil.

12. Dispositif sans fil RedCap selon l'une quelconque des revendications 9 à 11, dans lequel une différence entre une valeur qui s'applique pour le seuil lorsque le PDSCH est reçu dans une bande passante qui est supérieure à la bande passante réduite et une valeur qui s'applique pour le seuil lorsque le PDSCH est reçu dans une bande passante qui n'est pas supérieure à la bande passante réduite dépend d'un espacement de sous-porteuses.

13. Dispositif sans fil RedCap selon la revendication 12, dans lequel le PDSCH porte une réponse d'accès aléatoire, RAR, et la transmission de liaison montante planifiée est une transmission de canal partagé de liaison montante physique, PUSCH, planifiée par un octroi de liaison montante de la RAR, dans lequel l'espacement de sous-porteuses est un espacement de sous-porteuses configuré pour le PDSCH et/ou un espacement de sous-porteuses configuré pour la transmission de PUSCH.

14. Procédé (900) réalisé par un nœud de réseau, le procédé comprenant :

   la transmission (912) d'un canal partagé de liaison descendante physique, PDSCH, à un dispositif sans fil à capacité réduite, RedCap, dans lequel le PDSCH inclut la planification d'une transmission de liaison montante ; dans lequel la transmission de liaison montante planifiée depuis le dispositif sans fil RedCap doit être reçue par le nœud de réseau sur la base du fait qu'une durée entre la réception du PDSCH par le dispositif sans fil RedCap et un début de la transmission de liaison montante planifiée est supérieure à un seuil, dans lequel le seuil dépend de si le PDSCH est transmis dans une bande passante qui est supérieure à une bande passante réduite associée à des dispositifs sans fil RedCap.

15. Nœud de réseau (300) comprenant une circuiterie de traitement (302), la circuiterie de traitement étant exploitable pour :

   transmettre un canal partagé de liaison descendante physique, PDSCH, à un dispositif sans fil à capacité réduite, RedCap, dans lequel le PDSCH inclut la planification d'une transmission de liaison montante ; dans lequel la transmission de liaison montante planifiée depuis le dispositif sans fil RedCap doit être reçue par le nœud de réseau sur la base du fait qu'une durée entre la réception du PDSCH par le dispositif sans fil RedCap et un début de la transmission de liaison montante planifiée est supérieure à un seuil, dans lequel le seuil dépend de si le PDSCH est transmis dans une bande passante qui est supérieure à une bande passante réduite associée à des dispositifs sans fil RedCap.

UE RF bandwidth and size of BWP (20 MHz)

Non-data channels and signals can span up to 20 MHz

UE baseband bandwidth for data (5 MHz)

Figure 1

EP 4 569 990 B1

COMMUNICATION SYSTEM
100

HOST
116

TELECOMMUNICATION NETWORK
102

CORE NETWORK
106

CORE NETWORK
NODE
108

ACCESS NETWORK
104

NETWORK NODE
110A

NETWORK NODE
110B

UE
112A

UE
112B

HUB
114

UE
112C

UE
112D

Fig. 2

UE 200

PROCESSING CIRCUITRY

202

INPUT/OUTPUT INTERFACE

206

POWER SOURCE

208

BUS 204

MEMORY 210

APPLICATION PROGRAMS 214

DATA 216

COMMUNICATION INTERFACE 212

TRANSMITTER 218

RECEIVER 220

ANTENNA 222

Fig. 3

Fig. 4

HOST __400__

| PROCESSING CIRCUITRY 402 | INPUT/ OUTPUT INTERFACE 406 | NETWORK INTERFACE 408 | POWER SOURCE 410 |

BUS __404__

MEMORY 412

HOST APPLICATION PROGRAMS   414

DATA   416

Fig. 5

EP 4 569 990 B1

VIRTUALIZATION ENVIRONMENT   500

MANAGEMENT AND ORCHESTRATION

510

APPLICATION / VIRTUAL APPLIANCE / VIRTUAL NODE OR SERVER / INSTANCE

502

VM   508A

VM   508B

VIRTUALIZATION LAYER   506

HARDWARE

504

CONTROL SYSTEM

512

Fig. 6

HOST
602

HOST PROVIDES USER DATA
608

HOST INITIATES
TRANSMISSION CARRYING
THE USER DATA TO UE
610

HOST RECEIVES THE
USER DATA
TRANSMITTED FROM
UE
622

CONNECTION
660

NETWORK NODE
604

NETWORK NODE
TRANSMITS THE USER
DATA TO UE
612

NETWORK NODE
TRANSMITS THE USER
DATA TO HOST
620

OTT
CONNECTION
650

WIRELESS
CONNECTION
670

UE
606

UE RECEIVES THE
USER DATA
614

UE INITIATES
TRANSMISSION OF THE
USER DATA TO HOST
618

UE PROVIDES USER
DATA
616

Fig. 7

800

812 – receive a PDSCH including scheduling for an uplink transmission

814 – determine whether a time duration between receiving the PDSCH and a start of the scheduled uplink transmission is greater than a threshold value

Yes

816 – transmit the scheduled uplink transmission

No

818 – retransmit a PRACH

Figure 8

900

912 – transmit a PDSCH to a RedCap wireless device, wherein the PDSCH includes scheduling for an uplink transmission

914 – when a time duration between the wireless device receiving the PDSCH and a start of the scheduled uplink transmission is greater than a threshold value, receive the scheduled uplink transmission from the wireless device

916 – when a time duration between the wireless device receiving the PDSCH and a start of the scheduled uplink transmission is not greater than a threshold value, receive a retransmission of a physical PRACH from the wireless device

Figure 9

EP 4 569 990 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115175143 A

**Non-patent literature cited in the description**

- **ERICSSON**. Revised WID on support of reduced capability NR devices. *3GPP TSG RAN #95e*, March 2022
- **ERICSSON**. New SID on Study on further NR RedCap UE complexity reduction. *3GPP TSG RAN #94e*, December 2021
- **ERICSSON**. New WID on enhanced support of reduced capability NR devices. *3GPP TSG RAN #97e*, September 2022
- **ERICSSON**. RAN1 agreements for Rel-18 NR RedCap. *3GPP TSG RAN WG1 Meeting #110bis-e*, October 2022